# EUROPÄISCHE PATENTSCHRIFT

(11) **EP 1 747 688 B1**
(45) Veröffentlichungstag und Bekanntmachung des Hinweises auf die Patenterteilung: **28.05.2008**
(21) Anmeldenummer: 05731632.5
(22) Anmeldetag: 14.04.2005
(51) Int. Cl.: H04Q 7/22

(54) **VERFAHREN ZUR PRIORISIERUNG VON NETZWERKEN IN EINEM TELEKOMMUNIKATIONS-ENDGERÄT MIT DIGITAL RIGHTS MANAGEMENT CHARAKTERISTIKEN**
METHOD FOR PRIORITIZING NETWORKS IN A TELECOMMUNICATIONS TERMINAL HAVING DIGITAL RIGHTS MANAGEMENT CHARACTERISTICS
PROCEDE DE PRIORISATION DE RESEAUX DANS UN TERMINAL DE TELECOMMUNICATION A CARACTERISTIQUES DE GESTION NUMERIQUE DES DROITS

(30) Priorität: 19.05.2004 DE 102004024869
(43) Veröffentlichungstag der Anmeldung: 31.01.2007
(73) Patentinhaber: SIEMENS AKTIENGESELLSCHAFT, 80333 München (DE)
(72) Erfinder: TRAUBERG, Markus, 38159 Velchede (DE)
(86) Internationale Anmeldenummer: PCT/EP2005/051651
(87) Internationale Veröffentlichungsnummer: WO 2005/115027

(56) Entgegenhaltungen:
- WO-A-01/58190
- US-A- 5 999 811
- US-A- 6 148 198
- US-A1- 2003 003 922

## Beschreibung

Die vorliegende Erfindung beschreibt ein Verfahren zur Priorisierung von Telekommunikations-Netzwerken in einem Telekommunikations-Endgerät, bei dem ein Nutzdatenobjekt in dem Telekommunikations-Endgerät gespeichert wird und bei dem dem Nutzdatenobjekt ein Zugriffsparameter zugeordnet wird.

Aus dem Stand der Technik ist ein Verfahren bekannt und wurde von der sogenannten "Open Mobile Alliance (OMA)" zumindest teilweise spezifiziert, mit dem digitale Inhalte auf mobilen Telekommunikations-Endgeräten vor Zugriffen durch unautorisierte Nutzer geschützt werden können und autorisierten Nutzern genau definierte Rechte zur Nutzung der Inhalte eingeräumt werden können. Dieses Verfahren wird als "Digital Rights Management" (DRM) bezeichnet.

Bisher wurden von der "Open Mobile Alliance" drei verschiedene Methoden zum Rechtemanagement für digitale Inhalte, wie zum Beispiel sogenannte "Medienelemente" (Dateien mit digitalen Bild-, Text-, Ton-Daten und/oder anderen Multimedia-Daten), in mehreren Spezifikationen definiert und verabschiedet. Die drei spezifizierten Methoden sind im Einzelnen:

"Forward-Lock": Das oder die Medienelement(e) werden in einen neuen Datentyp eingepackt, der neben den Medienelementen noch einige wenige Signalisierungsinformationen enthält. Mit dem neuen Datentyp ("application/oma.drm.message" gemäß der OMA Spezifikation) ist die Beschränkung verknüpft, dass die darin enthaltenen Objekte nicht weitergeleitet, nicht im Dateisystem frei zugänglich abgespeichert und nicht verändert werden dürfen. Es ist somit eine spezielle Behandlung der Objekte dieses Typs durch ein Endgerät erforderlich.
- "Combined-Delivery": Die Medienelemente sind in denselben Datentyp eingepackt wie bei der Methode "Forward-Lock". Zusätzlich ist darin noch eine Rechtebeschreibung enthalten, mit der weitere Restriktionen bezüglich der Nutzung der digitalen Medienobjekte festgelegt werden können. Beispiele hierfür sind die Beschränkung der Nutzungszeit, der Nutzungshäufigkeit oder der Nutzungsart (z.B. "nicht drucken").
- "Separate-Delivery": Die Medienobjekte werden verschlüsselt in einen weiteren neuen Datentyp ("application/oma.drm.content" gemäß der OMA Spezifikation, im folgenden auch als DRM-Container (DRMC) bezeichnet) eingepackt, der wiederum einige Signalisierungsinformationen enthält. Durch die verschlüsselung kann der Inhalt vor unautorisierter Benutzung geschützt werden, auch wenn er von einer Anwendung ohne spezifische DRM-Funktionalität gehandhabt und in dem frei zugänglichen Speicherbereich eines Endgerätes abgelegt wird. Zusätzlich wird über einen sicheren Kanal ein Rechteobjekt zum Empfänger übertragen. Es hat in der textuellen Codierung den Datentyp "application/vnd.oma.drm.rights+xml" gemäß der OMA Spezifikation und in der binären Codierung den Typ "application/vnd.oma.drm.rights+wbxml".

In den beiden Methoden "Combined Delivery" und "Separate Delivery" spielt das Rechteobjekt (RO) eine zentrale Rolle. Dieses Objekt enthält die Informationen über die mit einem Inhaltsobjekt verknüpften Rechte (die Rechtebeschreibung) und bei Verwendung der Methode "Separate Delivery" auch den Schlüssel zum Entschlüsseln des verschlüsselten Inhaltsobjekts im DRMC.

Die Definition des Rechteobjektes ist durch die Spezifikation OMA-Download-DRMREL-vl-0-20020913-C in Verbindung mit einer XML DTD (eXtensible Markup Language Document Type Definition) gegeben, die unter http://www.openmobllealliance.org/docs/drmre110.dtd abrufbar ist.

In der aktuellen version der Definition für ein Rechteobjekt sind einige Rechte und Einschränkungen enthalten. Zu den Rechten zählen:
- "Abspielen" (für audio-visuelle Inhalte),
- "Anzeigen" (für visuelle Inhalte (Bilder, video)),
- "Ausführen" (für ausführbare Programme) und
- "Drucken" (für das Erstellen einer materiellen Kopie eines Inhalts wie z.B. Bilder, Texte oder Graphiken).

Die bisher definierten Einschränkungen beziehen sich auf
- die Anzahl der erlaubten Nutzungen oder
- eine erlaubte Nutzungsdauer. Diese kann entweder durch einen Start- und einen Endzeitpunkt (absolut oder relativ zum Startzeitpunkt) festgelegt werden oder auch eine maximale kumulierte Nutzungsdauer beschreiben.
   Bei der Methode "Separate Delivery" ist das Inhaltsobjekt (das zu schützende Medienobjekt) im DRM- Container enthalten. Dieser hat zwei Bestandteile: einerseits das verschlüsselte Inhaltsobjekt und andererseits einen Kopfteil, der Steuerinformationen und eine Beschreibung des Inhaltsobjekts enthält. Zu den Steuerinformationen gehört eine Referenz ("Rights-Issuer") auf den Rechteanbieter (RA), die vom Endgerät genutzt werden kann, um weitere Rechte für das Inhaltsobjekt zu erhalten, und eine eindeutige Referenz, die so genannte "ContentURI", die zur Referenzierung des Inhaltsobjekts aus dem Rechteobjekt heraus dient. Diese Referenz (in Form einer URI) wird im Rechteobjekt als Referenz verwendet, um die Verbindung zwischen Rechteobjekt und Inhaltsobjekt darzustellen.
   Die bisher beschriebene DRM Variante ist von der Open Mobile Alliance in den Spezifikationen
- "Digital Rights Management". Open Mobile Alliance: OMA-Download-DRM-v1_0,
- "DRM Rights Expression Language". Open Mobile Alliance: OMA-Download-DRMREL-v1_0 und
- "DRM Content Format". Open Mobile Alliance: OMA-Download-DRMCF-v1_0
definiert.

Es ist ein Nachteil des Stands der Technik, dass die daraus bekannten Verfahren eine Kopplung von Benutzungs-Rechten von solchen digitalen Inhalten an das Umfeld eines Nutzers, wie beispielsweise seinen Aufenthaltsort, bestimmte Mobilfunknetze oder technische Randbedingungen, nicht zulassen.

Aus den Druckschriften US 6148198 und WO 01/58190 A1 sind Verfahren zur endgeräteseitigen Auswahl eines Service-Providers bzw. Funknetzes aus einer Mehrzahl von Service-Providern bzw. Funknetzen bekannt. Eine Reglementierung des Zugriffs auf in einem Endgerät vorliegende Nutzdaten ist bei den dort beschriebenen Verfahren jedoch nicht vorgesehen.

Es ist daher Aufgabe der vorliegenden Erfindung, dem Nutzer eines mobilen Telekommunikations-Endgeräts eine komfortablere Nutzung von solchen digitalen Inhalten zu ermöglichen, deren Verwendung an ein Umfeld des Nutzers gekoppelt ist.

Diese Aufgabe wird gelöst durch ein Verfahren zur Priorisierung von Telekommunikations-Netzwerken in einem Telekommunikations-Endgerät,
- bei dem ein Nutzdatenobjekt in dem Telekommunikations-Endgerät gespeichert wird,
- bei dem dem Nutzdatenobjekt ein Zugriffsparameter zugeordnet wird, der den Zugriff auf das Nutzdatenobjekt in Abhängigkeit davon zulässt, in welches Telekommunikations-Netzwerk das Telekommunikations-Endgerät eingebucht ist,
- bei dem die Telekommunikationsnetzwerke unter Verwendung des Zugriffsparameters priorisiert werden.

Durch die Zuordnung eines Zugriffsparameters, der die Benutzung eines Nutzdatenobjekts in Abhängigkeit davon erlaubt oder verbietet, in welches Telekommunikations-Netzwerk das Telekommunikations-Endgerät eingebucht ist, wird es möglich, die Verwendung des Nutzdatenobjektes an das Umfeld eines Nutzers zu koppeln. Dadurch, dass diese Information zur Priorisierung von Telekommunikations-Netzwerken verwendet wird, erhält der Nutzer des mobilen Telekommunikations-Endgeräts eine komfortable Möglichkeit, das Nutzdatenobjekt zu verwenden. Zur Priorisierung kann zum Beispiel ausschliesslich der Zugriffsparameter verwendet werden. Weiterhin können bei der Priorisierung neben dem Zugriffsparameter aber auch noch weitere Kritierien berücksichtigt werden. Solche weiteren Kriterien können beispielsweise tarifliche Aspekte oder Netzverfügbarkeit sein.

Die Priorisierung kann beispielsweise derart erfolgen, dass ein Telekommunikations-Netzwerk, in welchem gemäß des Zugriffsparameters die Verwendung des Nutzdatenobjekts gestattet ist, eine höhere Priorität erhält als ein Telekommunikations-Netzwerk, in welchem die Verwendung des Nutzdatenobjekts nicht gestattet ist. Diese Information ermöglicht eine Auswahl eines Telekommunikations-Netzwerks, beispielsweise aus einer Anzahl angebotener Telekommunikations-Netzwerke, derart, dass das Nutzdatenobjekt im Telekommunikations-Endgerät auch tatsächlich verwendet werden kann. Der Nutzer des Telekommunikations-Endgeräts muss daher bei der Verwendung des Nutzdatenobjekts keinen unnötigen Aufwand betreiben.

Die Priorisierung der Telekommunikations-Netzwerke kann beispielsweise derart erfolgen, dass das mobile Telekommunikations-Endgerät verschiedene am Ort des Telekommunikations-Endgeräts verfügbare Telekommunikationsnetzwerke auf die Zulassung des Nutzdatenobjekts im jeweiligen Telekommunikations-Netzwerk hin überprüft und diejenigen, welche eine Verwendung des Nutzdatenobjekts zulassen, höher priorisiert als solche, welche die Verwendung des Nutzdatenobjekts nicht zulassen. Bei der Auswahl eines Telekommunikations-Netzwerks werden dann solche mit hoher Priorität, insbesondere ein Telekommunikations-Netzwerk mit der höchsten Priorität, bevorzugt ausgewählt. Dabei können auch mehrere Telekommunikations-Netzwerke die gleiche Priorität, insbesondere auch die gleiche höchste Priorität, besitzen. Bei der Auswahl eines Telekommunikationsnetzwerks aus eine Anzahl gleich priorisierter Netzwerke können dann auch noch andere Auswahlkriterien, wie zum Beispiel tarifliche Kriterien oder Netzverfügbarkeit, herangezogen werden.

Die Priorisierung kann beispielsweise in einer Rangfolge aufeinanderfolgender Prioritäten erfolgen oder auch als Einsortierung von vorgegebenen Prioritätsklassen (z.B. in eine Klasse für Netzwerke mit hoher Priorität, eine Klasse für Netze mit mittlerer Priorität und eine Klasse für Netze niedriger Priorität). Die Priorität kann beispielsweise zusammen mit dem Telekommunikations-Netzwerk im Telekommunikations-Endgerät abgespeichert sein. Weiterhin kann die Priorisierung auch derart erfolgen, dass ohne ein dauerhaftes Abspeichern der Priorität bei der Auswahl eines Telekommunikations-Netzwerks ein Telekommunikations-Netzwerk entsprechend einer temporär im Rahmen dieser speziellen Auswahl vergebenen Priorität ausgewählt wird und bei einer späteren Auswahl eines Telekommunikations-Netzwerk die Priorisierung neu ermittelt wird.

Telekommunikations-Netzwerke können beispielsweise als Telekommunikations-Festnetze, als Mobilfunk-Netzwerke oder auch als lokale Funk-Netze, wie beispielsweise Bluetooth oder WLAN-Netze oder DECT-Netze ausgebildet sein. Mobilfunknetze können beispielsweise nach dem GSM-, dem UMTS-, dem CDMA-2000 oder ähnlichen Standards, oder auch Kombinationen davon, eingerichtet sein. Telekommunikations-Endgeräte können beispielsweise Festnetz-Telefone, Mobiltelefone, Hand-Held-Geräte mit einem Telekommunikationsmodul, Computer mit einem Telekommunikationsmodul (beispielsweise mit einem Mobilfunkmodul oder einem Festnetzmodem) und jegliche Art von Endgeräten sein, die an Festnetzdatenleitungen wie beispielsweise einem Telefonnetz oder einem Datennetz angeschlossen sind oder angeschlossen werden können.

Nutzdatenobjekte können beispielsweise jegliche Art von Multimediadaten, wie z.B. Bild, Ton und/oder Textdaten sein. Weiterhin können Nutzdaten auch jegliche Art von Applikationen wie beispielsweise Computerprogramme oder andere Software-Applikationen beispielsweise C-Applikationen, JAVA-Applikationen, SIM-Toolkit-Applikationen (STK-Applikationen) oder Ähnliches, sein.

Ein Zugriffsparameter, der den Zugriff auf das Nutzdatenobjekt in Abhängigkeit davon zulässt, in welches Telekommunikations-Netzwerk das Telekommunikations-Endgerät eingebucht ist, kann beispielsweise eine netzwerkbezogene, eine technisehe und/oder eine geographische Zulassungsinformation umfassen.

Eine netzwerkbezogene Zulassungsinformation kann beispielsweise die Beschränkung der Nutzung des Nutzdatenobjekts auf Telekommunikations-Netzwerke eines oder mehrerer Mobilfunkbetreiber sein oder auch der Ausschluss der Nutzung des Nutzdatenobjekts in Netzen von einem oder mehreren Netzwerkbetreibern.

Technische Zulassungsinformationen können beispielsweise Informationen über einen verwendeten Funkstandard sein (wie z.B. GSM, UMTS, CDMA 2000, WLAN, und/oder Bluetooth). Weiterhin können technische Zulassungsinformationen zum Beispiel auch Informationen über das Vorhandensein bestimmter technischer Voraussetzungen des Telekommunikations-Netzwerks sein, wie beispielsweise das Vorhandensein spezieller optionaler Eigenschaften oder Services (z.B. Vorhandensein von Multimedia-Messaging in einem Mobilfunknetz, Vorhandensein von "High Speed Downlink Paket Access" (HSDPA) in einem UMTS-Netzwerk oder Ähnliches).

Geographische Zulassungsinformationen können beispielsweise Informationen über die Zulässigkeit der Verwendung eines Nutzdatenobjekts in bestimmten Ländern oder Regionen sein. Ein Zugriffsparameter kann auch mehrere solcher Zulassungsinformationen umfassen wie beispielsweise die Kombination eines netzwerkbezogenen und eines geographischen Zugriffsparameters, z.B. die Beschränkung der Nutzung eines Nutzdatenobjekts auf einen bestimmten Netzwerkbetreiber in einem bestimmten Land.

Es kann zum Beispiel vorgesehen sein, dass ein Nutzer sich an einem Ort innerhalb eines definierten Bereiches aufhalten muss, um die Rechte zum Zugriff auf den entsprechenden Inhalt zu erhalten. Die Definition der entsprechenden Restriktion kann entweder durch eine geografische Bedingung erfolgen oder sie wird indirekt beschrieben, indem gefordert wird, dass das Endgerät eines Nutzers in ein bestimmtes oder eines von mehreren möglichen Mobilfunknetzen eingebucht ist, wobei mit dem/den Mobilfunknetzen ein Versorgungsgebiet indirekt definiert ist. Es kann dadurch einerseits eine Beschränkung z.B. auf ein Land erfolgen, indem die Rechte nur gewährt werden, wenn das Mobilfunkendgerät in eines der in einem Land verfügbaren Netze eingebucht ist, andererseits kann aber auch eine Beschränkung auf einen bestimmten Netzbetreiber festgelegt werden, indem die Rechte nur dann gewährt werden, wenn das Mobilfunkendgerät in ein Netzwerk des Mobilfunknetzbetreibers eingebucht ist. Beispielsweise kann ein Netzbetreiber durch die Beschränkung der Rechte auf seine eigenen Mobilfunknetze in bestimmten Ländern die Nutzer dazu motivieren, mit ihrem Mobiltelefon auch bei einem Aufenthalt im Ausland bevorzugt in eines seiner eigenen Netzwerke eingebucht zu sein, wenn sie bestimmte, DRM-geschützte (DRM: "Digital Rights Management") Inhalte nutzen wollen.

Ein Zugriffsparameter kann auch derart ausgestaltet sein, dass er Bedingungen beschreibt, unter welchen die Benutzung eines Nutzdatenobjekts gestattet ist. Weiterhin kann er auch so ausgestaltet sein, dass er Bedingungen angibt, unter welchen die Verwendung des Nutzdatenobjekts nicht gestattet ist. Bei mehreren Zulassungsinformationen können innerhalb eines Zugriffsparameters auch beide Möglichkeiten gleichzeitig vorhanden sein.

Wenn ein Nutzer zum Beispiel ein spezielles Nutzdatenobjekt verwenden möchte, kann das Telekommunikations-Endgerät versuchen, sich in ein Telekommunikations-Netzwerk einzubuchen, in welchem der Zugriff auf das Nutzdatenobjekt gemäß dem Zugriffsparameter zugelassen ist. In diesem Zusammenhang kann vorgesehen sein, dass das Telekommunikations-Endgerät versucht, sich in ein möglichst hoch priorisiertes Telekommunikationsnetz einzubuchen. Es kann auch vorgesehen sein, dass das Telekommunikations-Netzwerk versucht, sich gerade nicht in ein niedrig priorisiertes Telekommunikations-Netzwerk einzubuchen.

Im Zusammenhang mit dem vorstehend beschriebenen Verfahren kann das Telekommunikations-Endgerät auch selbsttätig versuchen, sich in das verwendete Telekommunikations-Netzwerk einzubuchen. In diesem Fall könnte beispielsweise ein Nutzer nur den Wunsch der Verwendung des Nutzdatenobjektes in das Telekommunikations-Endgerät eingeben und das Telekommunikations-Endgerät selbsttätig die Auswahl eines geeigneten Telekommunikations-Netzwerks vornehmen. Dies erhöht die Anwenderfreundlichkeit solcher Nutzdatenobjekte mit Zulassungsbeschränkungen. Um zum Beispiel sicher zu gehen, dass sich das Telekommunikations-Endgerät nicht in ein vom Nutzer unerwünschten Netz einbucht (das dem Nutzer zum Beispiel zu teuer ist), kann beispielsweise vorgesehen sein, dass vor dem Einbuchen das Telekommunikations-Endgerät dem Nutzer eine Nachricht ausgibt, welches Telekommunikations-Netzwerk für das kommende Einbuchen geplant ist. Durch seine Zustimmung kann der Benutzer dann das Einbuchen initiieren. Durch eine Ablehnung kann er zum Beispiel die Auswahl eines alternativen Telekommunikations-Netzwerks oder auch den Abbruch der Verbindungsaufnahme auslösen.

Das Telekommunikations-Endgerät kann weiterhin beispielsweise vor einem Einbuchen in ein verwendetes Telekommunikations-Netzwerk schon in einem anderen Telekommunikations-Netzwerk eingebucht sein. Dann ist es vorteilhaft, beispielsweise im Zusammenhang mit dem Wunsch der Verwendung eines Nutzdatenobjekts, wenn sich das Telekommunikations-Endgerät selbsttätig aus dem vorhergehenden Telekommunikations-Netzwerk ausbucht. Dann kann es sich, beispielsweise gemäß dem im vorstehenden Absatz beschriebenen Verfahren, in ein Telekommunikations-Netzwerk einbuchen, in welchem die Nutzung des Nutzdatenobjektes gemäß dem Zugriffsparameter zulässig ist. Diese Ausführungsform ermöglicht ebenfalls einen hohen Komfort eines Nutzers bei der Verwendung von Nutzdatenobjekten.

In einer weiteren Ausführungsform kann vorgesehen sein, dass mindestens ein bevorzugtes Telekommunikations-Netzwerk die höchste Priorität erhält, welches gemäß einer maximalen Zahl von im Telekommunikations-Endgerät vorliegenden Zugriffsparametern zugelassen ist. Dabei kann beispielsweise ein Zugriffsparameter vorliegen. Weiterhin können auch mehrere Zugriffsparameter vorliegen. Im zweiten Fall erhält das Telekommunikations-Netzwerk bzw. erhalten die Telekommunikations-Netzwerke die höchste Priorität, welche unter einer maximal möglichen Zahl von Zugriffsparametern zugelassen sind.

Außerdem ist auch ein entsprechend komplementäres verfahren verwendbar: In einem solchen würde das mindestens eine am wenigsten bevorzugte Telekommunikations-Netzwerk die niedrigste Priorität erhalten, welches gemäß einer maximalen Zahl von im Telekommunikations-Endgerät vorliegenden Zugriffsparametern unzulässig ist.

Das Telekommunikations-Endgerät kann dann versuchen, sich beispielsweise in ein Telekommunikations-Netzwerk mit der höchsten Priorität einzubuchen oder versuchen, sich gerade nicht in ein Telekommunikations-Netzwerk mit der niedrigsten Priorität einzubuchen. Bei mehreren Telekommunikations-Netzwerken mit der höchsten Priorität kann bei der Auswahl des Telekommunikations-Netzwerks, in welches das Telekommunikations-Endgerät versucht sich einzubuchen, weitere Kriterien (wie z.B. besonders geringen Preise für Gespräche oder Text-übertragung (z.B. SMS (Short Message Service) beim Mobilfunk)) eine Rolle spielen. Ist ein Einbuchen in das auf diese Weise ausgewählte Telekommunikations-Netzwerk nicht möglich, so kann das Telekommunikations-Endgerät versuchen, wenn vorhanden sich in ein weiteres Telekommunikations-Netzwerk mit der höchsten Priorität einzubuchen oder auch versuchen, sich in ein Telekommunikations-Netzwerk mit der nächst niederen Priorität sich einzubuchen. Auf diese Weise kann erreicht werden, dass das Telekommunikations-Endgerät in dasjenige der tatsächlich verfügbaren Telekommunikations-Netzwerke eingebucht ist, welches zur Nutzung eines oder mehrerer Nutzdatenobjekte im Telekommunikations-Endgerät am geeignetsten ist.

Die Priorisierung kann auch im Rahmen einer Liste erfolgen. In diesem Fall können gemäß dem Zugriffsparameter oder den im Telekommunikations-Endgerät vorliegenden Zugriffsparametern zugelassene Telekommunikations-Netzwerke in eine im Telekommunikations-Endgerät und/oder im Telekommunikations-Netzwerk geführte Liste bevorzugter Kommunikationsnetzwerke aufgenommen werden, bzw. diese können darin aufgenommen sein. Innerhalb einer solchen Liste können beispielsweise Telekommunikations-Netzwerke, die gemäß einem oder mehrerer Zugriffsparameter zugelassen sind, höher priorisiert werden, als solche, die gemäß dem einen oder den mehreren Zugriffsparametern nicht zugelassen sind.

Innerhalb der Menge der durch mindestens einen Zugriffsparameter zugelassenen Telekommunikations-Netzwerke kann weiterhin vorgesehen sein, dass diejenigen Telekommunikations-Netzwerke am höchsten priorisiert werden, welche gemäß einer maximalen Anzahl von Zugriffsparametern zugelassen sind. Die weitere Priorisierung erfolgt dann absteigend gemäß der Anzahl der Zugriffsparameter, unter welchen die Telekommunikations-Netzwerke jeweils zugelassen sind.

Weiterhin kann die niedrigste Priorität innerhalb einer solchen Liste beispielsweise demjenigen mindestens einen Telekommunikations-Netzwerk zugeordnet sein, welches unter einer maximalen Anzahl von Zugriffsparametern nicht zugelassen ist. Auch hier kann die weitere Hierarchie gemäß der Anzahl der unzulässigen Zugriffsparameter erfolgen. Innerhalb der Liste können weiterhin, insbesondere bei Telekommunikations-Netzwerken gleich hoher Priorität, weitere Priorisierungs-Parameter Verwendung finden, wie beispielsweise bestimmte gewünschte Netzwerkbetreiber oder notwendige technische Eigenschaften.

Beim Einbuchen in ein Telekommunikations-Netzwerk kann das Telekommunikations-Endgerät das am höchsten oder eines der am höchsten priorisierten Telekommunikations-Netzwerke aus der Liste bevorzugter Telekommunikations-Netzwerke ablesen und versuchen, sich darin einzubuchen. Bei Misserfolg kann weiterhin vorgesehen sein, dass das Telekommunkations-Endgerät ein Telekommunikations-Netzwerk mit einer nächstniederen Priorität oder ein Telekommunikations-Netzwerk mit der gleichen Priorität als nächstes Zielnetzwerk verwendet.

Die Verwendung einer solchen Liste ist zum Beispiel in dem Fall vorteilhaft, wenn der Nutzer sich in ein Telekommunikations-Netzwerk einbuchen möchte, ohne konkret die Verwendung eines nur eingeschränkt nutzbaren Nutzdatenobjektes zu beabsichtigen. In diesem Fall wird durch die Verwendung des vorstehend beschriebenen Verfahrens erreicht, dass sich der Nutzer in ein Telekommunikations-Netzwerk einbucht, welches eine hohe Wahrscheinlichkeit aufweist, dass die im Telekommunikations-Endgerät gespeicherten Nutzdatenobjekte ohne ein Umbuchen des Netzwerks auch tatsächlich nutzbar sind.

Weiterhin kann entsprechend der vorstehend beschriebenen Liste bevorzugter Telekommunikations-Netzwerke auch eine entsprechende Negativliste verwendet werden. In einer solchen werden diejenigen Telekommunikations-Netzwerke geführt, welche gemäß zumindest einem im Telekommunikations-Endgerät gespeicherten Zugriffsparameters unzulässig sind. Die Priorisierung einer solchen Liste erfolgt sinngemäß entsprechend der vorstehend beschriebenen Priorisierung der Positiv-Liste.

Die Auswahl eines Telekommunikationsnetzwerks kann für einen Nutzer weiterhin verbessert werden, indem zu den vorgenannten Priorisierungs-Parametern weiterhin die Information genutzt wird, in welches Telekommunikations-Netzwerk das Telekommunikations-Endgerät zuletzt eingebucht war. Diese Information kann beispielsweise derart verwendet werden, dass in dem Fall, in dem mehrere Telekommunikations-Netzwerke die gleiche Priorität gemäß der anderen vorstehend genannten Parameter aufweisen, das Telekommunikations-Endgerät sich zuerst versucht, in das Telekommunikations-Netzwerk einzubuchen, welches der Nutzer als letztes verwendet hat. Ein solches Verfahren macht die Verwendung des Telekommunikations-Endgeräts für den Nutzer noch angenehmer, wenn möglich in einer vertrauten Telekommunikations-Umgebung befindet.

Weiterhin kann im Rahmen des genannten Verfahrens vorgesehen sein, dass sich das Telekommunikations-Netzwerk immer in das Telekommunikations-Netzwerk einbucht, in welches das Telekommunikations-Endgerät zuletzt eingebucht war, solange die Verwendung von einem oder mehreren Nutzdatenobjekten in diesem Telekommunikations-Netzwerk möglich ist.

Die vorstehend genannte Aufgabe wird weiterhin gelöst von einem Telekommunikations-Endgerät mit einer Steuereinrichtung zur Durchführung eines Verfahrens gemäß der vorstehenden Beschreibung. Die Steuerung kann beispielsweise einen Mikroprozessor umfassen. Weiterhin kann die Steuereinrichtung auch einen dem Mikroprozessor zugeordneten Speicher umfassen, der beispielsweise zur Speicherung einer im Mikroprozessor ablaufende Software-Applikation vorgesehen sein kann. Eine solche Steuereinrichtung kann beispielsweise weiterhin einen sogenannten DRM-Agenten (DRM: Digital Rights Management) umfassen. Ein solcher DRM-Agent kann beispielsweise als eine Software-Applikation zur Steuerung aller der Prozesse auf dem Telekommunikations-Endgerät ausgebildet sein, die im Rahmen von Zugangsrechten zu Nutzdatenobjekten eine Rolle spielen (sog. DRM-relevante Prozesse). Weiterhin kann ein solcher DRM-Agent die Verwaltung von DRM-geschützten Objekten übernehmen.

Weiterhin kann das Telekommunikations-Endgerät eine Speichereinrichtung umfassen, wobei die Speichereinrichtung zur Speicherung der Liste bevorzugter Telekommunikations-Netzwerke und/oder der Liste unzulässiger Telekommunikations-Netzwerke ausgebildet sein kann. Die Speichereinrichtung kann weiterhin zumindest teilweise als entnehmbares Speichermodul (beispielsweise eine Multimedia-Karte oder eine SIM-Karte) ausgebildet sein, wobei die Liste bevorzugter bzw. unzulässiger Telekommunikations-Netzwerke zumindest teilweise auf dem entnehmbaren Speichermodul gespeichert sein kann. Weiterhin kann auch der DRM-Agent zumindest teilweise auf dem entnehmbaren Speichermodul gespeichert sein.

Ein solches entnehmbares Speichermodul hat für den Nutzer den weiteren Vorteil, dass beispielsweise bei der Verwendung mehrerer Telekommunikations-Endgeräte eine einheitliche Nutzung von Netzwerkressourcen möglich ist. Weiterhin müssen bestimmte Voreinstellungen durch den Nutzer beispielsweise nur einmal vorgenommen werden und können dann vermittels des entnehmbaren Speichermoduls zwischen verschiedenen Telekommunikations-Endgeräten übertragen werden.

Ein oder mehrere Zugriffsparameter für ein Nutzdatenobjekt können zum Beispiel in ein sogenanntes "Digital Rights Management (DRM)"-Rechteobjekt für ein entsprechendes Nutzdatenobjekt, z.B. eine Bild-, Ton- und/oder Text-Datei, eingebunden sein. Solche Rechteobjekte können beispielsweise direkt mit dem Nutzdatenobjekt verbunden sein (z.B. bei den am Anfang erwähnten, von der OMA spezifizerten Verfahren "Forward-Lock" und "Combined Delivery") oder als separate Dateien vorliegen (z.B. bei den am Anfang erwähnten, von der OMA spezifizerten verfahren "Separate Delivery").

Die Integration beispielsweise von netzwerkbezogenen Zugriffsparametern in ein DRM-Rechteobjekt kann auf Basis von Identifikationen erfolgen, die für Netzwerke festgelegt werden. Außerdem können auch Identifikationen für bestimmte Kategorien von Netzwerken definiert werden (z.B. alle Netzwerke eines bestimmten Netzwerkbetreibers) oder für Mobilfunksysteme im allgemeinen, wodurch die Beschränkung der Rechte auf ein oder mehrere Mobilfunksysteme (GSM, GPRS, UMTS, CDMA, PCS, ...) möglich ist. Damit kann z.B. eine DRM-geschützte Software auf eine Nutzung auf UMTS-Endgeräten beschränkt werden, weil z.B. eine hohe Datentransferrate auf dem Netzwerk erforderlich ist und diese nur mit UMTS erreicht werden kann.

Der vorstehend bereits erwähnte DRM-Agent kann zum Beispiel als eine Software-Applikation zur Steuerung aller DRMrelevanten Prozesse auf dem Gerät und zur Verwaltung von DRM-geschützten Objekten in DRM-Containern und DRM-Rechteobjekten ausgebildet sein. Solch ein DRM-Agent kann in einem Speicher auf dem Kommunikationsgerät gespeichert sein, zum Beispiel in einem Massenspeicher des Telekommunikations-Endgeräts., Der DRM-Agent kann dann eine Liste der bevorzugten Netzwerke auf dem Telekommunikations-Endgerät verwalten. Dabei kann es sich um die bereits für Telefonie-Dienste auf mobilen Kommunikationsgeräten übliche Liste handeln, es kann sich aber auch um eine erfindungsgemäß neue, zusätzliche Liste handeln, in die nur die Netzwerke eingetragen werden, die einen Bezug zu DRM Rechteobjekten haben.

Die Integration von Netzwerk- und/oder Mobilfunksystem-Kennungen in ein DRM-Rechteobjekt kann als einzelner Eintrag oder als Liste von Netzwerken/Mobilfunksystemen erfolgen. Dabei besteht die Möglichkeit eine positive Liste zu generieren, die alle Kennungen der erlaubten Netzwerke enthält, und auch die Möglichkeit eine negative Liste zu generieren, die alle Kennungen von nicht erlaubten Netzwerken/Mobilfunksystemen enthält. Sind beide Listen vorhanden, kann der DRM Agent beispielsweise ableiten, welche Netzwerke zu bevorzugen sind, indem die Einträge in beiden Listen berücksichtigt werden.

Gemäß der vorstehend beschriebenen Listen mit Netzwerkkennungen kann der DRM-Agent die Netzwahleinheit des mobilen Kommunikationsendgerätes so steuern, dass ein Netzwerk gewählt wird, mit dem möglichst viele Rechte von auf dem Endgerät vorhandenen DRM-Containern einen Zugriff auf die geschützten Inhalte erlauben, oder so, dass eine Nutzung der oder des Objekte(s), das/die der Nutzer mit erhöhter Wahrscheinlichkeit als nächstes nutzen wird, möglichst ohne eine Umbuchung des Endgerätes in ein anderes Netzwerk ermöglicht wird. Falls eine vorausschauende Auswahl eines geeigneten Netzwerkes in einem speziellen Fall nicht möglich ist, kann der DRM-Agent bei der vom Nutzer veranlassten oder automatisch erfolgenden Anfrage für konkrete Rechte zu einem DRM-geschützten Objekt überprüfen, ob die Rechte durch eine Umbuchung des Endgerätes in ein anderes Netzwerk gewährt werden können. Falls ja, kann der DRM-Agent entweder zum Beispiel ohne Rückfrage beim Nutzer eine entsprechende Umbuchung in das erforderliche Netzwerk veranlassen oder kann die Zustimmung des Nutzers zum Umbuchen abfragen und nach der Entscheidung durch den Nutzer entweder durch ein Umbuchen oder durch die Verweigerung, die angeforderten Rechte zu gewähren, reagieren.

Vorteile des vorstehend beschriebenen Verfahrens liegen beispielsweise in der Möglichkeit der Integration von Restriktionen für bestimmte Netzwerke und oder Mobilfunksysteme in den DRM-Container selbst. Ein weiterer Vorteil ist die Möglichkeit eine entsprechend analoge Funktionalität des DRM-Agent zur Erfüllung der Restriktion wie bereits oben bezüglich der Rechteobjekte beschrieben, zum Beispiel eine Einbuchung des mobilen Kommunikationsendgerätes in ein gefordertes Netzwerk/Mobilfunksystem vorausschauend oder auf Anfrage automatisch zu gewährleisten bzw. zu veranlassen. Hintergrund ist hier, dass für eine nutzerfreundliche vergebührung beim Herunterladen neuer Rechteobjekte bei einem Datentransfer über ein ausgewähltes Netzwerk beispielsweise die Vergebührung des Datentransports selbst unterdrückt werden kann, was eine bessere Transparenz der Kosten für den Nutzer ermöglicht.

### Ausführungsbeispiel 1: Beschränkung der Nutzung auf ein Netzwerk

Im einfachsten Fall kann die Nutzung eines DRM-geschützten Objekts auf die Nutzung in einem Netzwerk beschränkt werden. Nur wenn das Endgerät des Nutzers in dieses Netzwerk eingebucht ist oder zuletzt eingebucht war bevor der Nutzer die Netzabdeckung verloren hat, gewährt der DRM Agent dem Nutzer auf Anfrage hin die Rechte, den Inhalt entsprechend den weiteren Restriktionen zu nutzen. Ist das Endgerät bei der Nutzungsanfrage in ein anderes als das geforderte Netzwerk eingebucht veranlasst der DRM Agent die Netzwahleinheit - ggf. nach Einholung einer Bestätigung des Nutzers - eine automatisch Umbuchung in das geforderte Netzwerk vorzunehmen. Anschließend werden die Rechte zur Nutzung des DRM-geschützten Objekts vom DRM-Agenten gewährt.

### Ausführungsbeispiel 2: Beschränkung der Nutzung auf mehrere Netzwerke

weiterhin kann die Nutzung eines DRM-geschützten Objekts auf die Nutzung in mehreren Netzwerken beschränkt werden. Nur wenn das Endgerät des Nutzers in eines der Netzwerke eingebucht ist oder zuletzt eingebucht war bevor der Nutzer die Netzabdeckung verloren hat, gewährt der DRM Agent dem Nutzer auf Anfrage hin die Rechte, den DRM-geschützten Inhalt entsprechend den weiteren Restriktionen zu nutzen. Zwei Varianten lassen sich hier unterscheiden:

### Variante A: Alle Netzwerke eines Netzbetreibers

viele Mobilfunkfirmen betreiben mehrere Mobilfunknetze und sind darüber in mehreren Ländern präsent. Sie haben ein Interesse, dass die eigenen Kunden bei einem Aufenthalt im Ausland in ein weiteres Netz desselben Anbieters eingebucht sind. Beispielsweise betreibe die Firma A Mobilfunknetze in Großbritannien, Deutschland, und vielen anderen Ländern. Firma A kann DRM-geschützte Inhalte anbieten, die nur genutzt werden dürfen, wenn das Endgerät des Nutzers in ein Netzwerk der Firma A eingebucht ist. Hält sich ein Kunde der Firma A im Ausland auf und hat ein oder mehrere DRM-geschützte Objekte auf seinem Endgerät gespeichert, die nur in einem Netzwerk genutzt der Firma A werden dürfen, so bucht sich das Endgerät bevorzugt und automatisch in eine Netzwerk von Firma A ein, falls eines verfügbar ist.

Die bei Gesprächen und/oder Datenverkehr anfallenden Gebühren kommen dann Firma A direkt zu Gute. Dies ist ein Vorteil für den Netzbetreiber, der beispielsweise über zusätzlich angebotene DRM-geschützte Inhalte die Kundenbindung verbessern kann. Es kann auch ein Vorteil für den Nutzer sein, wenn Firma A z.B. die Gesprächsgebühren für roamende Mobilfunkteilnehmer in den eigenen Netzwerken günstiger gestaltet als bei den Netzwerken von konkurrierenden Anbietern. Durch die vorstehend beschriebene neue automatische Netzwahl des Endgerätes entstehen dem Nutzer durch die zusätzlichen Restriktionen bezüglich der geforderten Netzwerke keine Nachteile in der Handhabung der DRM-geschützten Inhalte. Das Endgerät erledigt für ihn automatisch die Sicherstellung der Konditionen, die zur Gewährung der Rechte erforderlich sind - vorausgesetzt, ein gefordertes Netzwerk ist auch verfügbar.

### Variante B: alle Netzwerke einer geografischen Region

viele Inhalte wie z.B. Musikstücke und videofilme unterliegen Vermarktungseinschränkungen, die sich auf bestimmte Regionen - typischerweise Staaten - beziehen. Ein Anbieter von derartigen Inhalten hat oft nur Rechte zur Vermarktung in bestimmten Staaten. Mit dem vorgestellten Verfahren lässt sich dies gut umsetzen, indem die Rechte für den DRM-geschützten Inhalt auf alle Netzwerke, die beispielsweise in der gewünschten Region/dem Staat verfügbar sind eingeschränkt werden. Nur wenn das Endgerät des Nutzers in eines der geforderten Netzwerke eingebucht ist, der Nutzer sich also praktisch in der geforderten Region/dem geforderten Staat aufhält, werden die Rechte gewährt. Dies hat den Vorteil, dass auch Inhalte, die den beschriebenen Restriktionen unterliegen überhaupt angeboten werden können, da mit dieser Variante die Einhaltung der Restriktionen gewährleistet werden kann. Bei einer automatischen Netzwahl kann dem Nutzer der Zugriff auf die Inhalte ohne Einschränkung des Nutzungskomforts gewährt werden.

### Ausführungsbeispiel 3: Beschränkung der Nutzung von Streaming Inhalten auf ein Netzwerk

Handelt es sich bei dem DRM-geschützten Inhalt zum Beispiel um Streaming-Inhalte, d.h. Inhalte, die während der Nutzung über die Luftschnittstelle zum Endgerät übertragen werden, könnte im DRM-Container zum Beispiel zunächst nur eine Beschreibung der Streaming-Inhalte und die nötigen Zugriffsparameter übertragen (z.B. per "Session Description Protocol" - SDP) werden. Die Nutzung des Inhalts erfolgt durch Übertragung der eigentlichen Nutzdaten über die Luftschnittstelle. Hier ist z.B. die Beschränkung der Nutzung auf bestimmte Netzwerke und/oder bestimmte Mobilfunksysteme sinnvoll, damit zum Einen eine ausreichende Übertragungsqualität und Bandbreite gewährleistet werden kann und zum Anderen auch eine dienste-spezifische Vergebührung angewendet werden kann, was oft nur möglich ist, wenn der Anbieter von Streaming-Inhalten und der Netzwerkbetreiber zusammenarbeiten oder identisch sind. Es wird damit möglich, die übertragenen Daten anders abzurechnen als sonst üblich. Beispielweise kann die Übertragung von Musikstücken zu einem Festpreis erfolgen, um dem Nutzer ein transparentes, einfach verständliches Gebührenmodell anzubieten.

Mit dem vorstehend beschriebenen Verfahren zur automatischen Netzwahl können Nachteile für den Nutzer durch die zusätzlichen Netzwerk-Restriktionen vermieden werden, indem das Endgerät zum Beispiel versucht, vorausschauend oder auch automatisch auf Nutzungsanfrage für die DRM-geschützten Inhalte hin durch Einbuchen des Endgerätes in ein gefordertes Netzwerk für die Erfüllung der Nutzungsbedingungen zu sorgen.

### Ausführungsbeispiel 4: Beschränkung der automatischen Abfrage von Rechten auf bestimmte Netzwerke

Eine Restriktion für bestimmte Netzwerke/Mobilfunksysteme kann neben dem Rechteobjekt auch in einem DRM-Container enthalten sein. Die Restriktion wird dann zum Beispiel so interpretiert, dass ein Zugriff auf Netzwerkressourcen zum Zweck der Beschaffung neuer Rechteobjekte nur dann automatisch erfolgen soll, wenn das Endgerät in das/eines der geforderten Netzwerk(e)/MObilfunksystem(e) eingebucht ist. Zugriffe zur Anfrage von Rechteobjekten beim Rechteanbieter können über die Luftschnittstelle auch automatisch durch das Endgerät möglich sein, wenn z.B. für eine "Vorschau" auf den Inhalt ein Rechteobjekt gratis heruntergeladen werden kann oder wenn z.B. im Rahmen eines bestehenden Vertragsverhältnisses weitere Rechte gratis heruntergeladen werden können. Zu diesem Zweck können in den DRM-Container Referenzen integriert sein, mit denen der DRM-Agent automatisch und ohne dass der Nutzer eingreifen muss die entsprechenden Rechteobjekte vom Rechteanbieter herunterläd.

Besonders vorteilhaft für den Nutzer ist es, wenn der Rechteanbieter in Zusammenarbeit mit dem Netzbetreiber gewährleistet, dass der Datentransfer nicht oder nur in einem geringeren als üblichen Maße vergebührt wird. Es besteht beispielsweise die Möglichkeit, dass der DRM-Agent die Rechte für eine Vorschau auf das DRM-geschützte Objekt völlig gratis herunterladen kann. Diese Variante kann durch das vorstehend beschriebene Verfahren beispielsweise unterstützt werden, indem der DRM-Agent den DRM-Container auf eventuell enthaltene Restriktionen untersucht, die gefundenen Restriktionen analysiert, die geforderten und oder zu meidenden Netzwerke/Mobilfunksysteme in die entsprechenden Listen im Endgerät übernimmt und vor der Nutzung der Referenzen zum automatischen Herunterladen weiterer Rechteobjekte eine Einbuchung/Umbuchung des Endgerätes in eines der geforderten Netzwerke veranlasst. Dadurch kann dem Nutzer ein komfortabler Dienst angeboten werden, bei dem die Kosten minimiert und der Komfort maximiert werden.

Weitere bevorzugte Ausführungsformen sind in den Unteransprüchen enthalten.

Im Folgenden wird die Erfindung anhand weiterer Beispiele mit Bezug auf die beiliegenden Figuren erläutert. Es zeigen:
- Figur 1:: Referenzierung eines Inhaltsobjekts von einem Rechteobjekt gemäß der Methode "Separate Delivery";
- Figur 2:: Blockschaltbild eines Kommunikations-Endgeräts;
- Figur 3:: Arbeitsschritte eines DRM-Agenten.

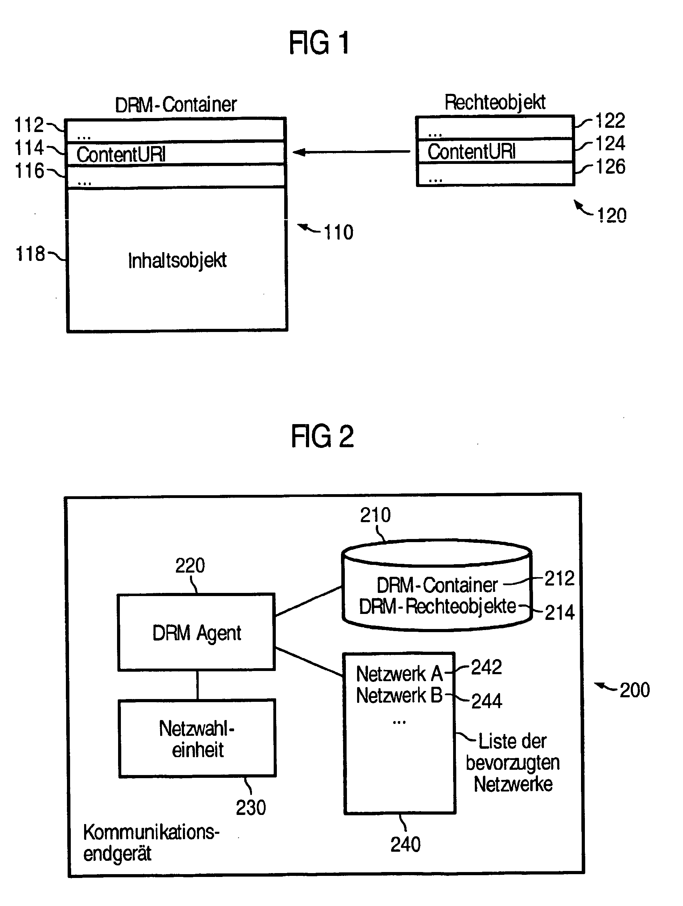

Figur 1 zeigt einen DRM-Container 110 und ein zugeordnetes DRM-Rechteobjekt 120, wie sie entsprechend der anfangs genannten Methode "Separate Delivery" gemäß der Open Mobile Alliance (OMA) verwendet wird. Die Abkürzung DRM bedeutet im Zusammenhang dieser Beschreibung "Digital Rights Management" und wird für Verfahren und Einrichtungen verwendet, die mit der Erstellung, Verwaltung und Ausführung von Zugangsrechten zu digitalen Daten zu tun haben.

Der DRM-Container 110 enthält neben den eigentlichen Nutzdaten 118 und verschiedenen diesen zugeordneten Beschreibungsdaten 112, 116 eine den Nutzdaten 118 zugeordnete sogenannte "Content URI" 114. Der DRM-Container 110 hat demnach zwei Bestandteile: einerseits das verschlüsselte Inhaltsobjekt 118 und andererseits einen Kopfteil 112, 114, 116, der Steuerinformationen und eine Beschreibung des Inhaltsobjekts 112, 116 enthält. Zu den Steuerinformationen 112, 116 gehört beispielsweise eine Referenz auf den Anbieter von digitalen Zugangsrechten, die von einem Telekommunikations-Endgerät genutzt werden können, um weitere digitale Rechte für das Inhaltsobjekt 118 zu erhalten. Weiterhin umfasst die Steuerinformation 112, 114, 116 eine eindeutige Referenz 114, die sogenannte "Content URI" 114, die zur Referenzierung des Inhaltsobjekts 118 aus dem zugeordneten Rechteobjekt 120 heraus dient.

Eine entsprechende Referenz 124 ist auch in dem zugeordneten Rechteobjekt 120 enthalten und dient dazu, die Verbindung zwischen Rechteobjekt 120 und DRM-Container 110 herzustellen. Das Rechteobjekt 120 enthält neben der "Content URI" 124 noch weitere Beschreibungen der zugeordneten Rechte und Verschlüsselungsinformationen 122, 126.

Gemäß der vorstehenden Beschreibung sind der in Figur 1 dargestellte DRM-Container 110 und/oder das Inhaltsobjekt 118 Beispiele für Nutzdatenobjekte. Zugriffsparameter können beispielsweise das Rechteobjekt 120, oder auch die darin enthaltenen Informationsblöcke 122, 124, 126 sein. Weiterhin können Zugriffsparameter auch die im Steuerinformationsblock 112, 114, 116 des DRM-Containers 110 enthaltenen Informationsblöcke 112, 114, 116 sein.

In Figur 2 ist ein Kommunikations-Endgeräts 200 dargestellt, welches zur Ausführung eines der vorstehend beschriebenen Verfahren eingerichtet ist. Das Kommunikations-Endgerät umfasst einen DRM-Container 212 sowie ein dem DRM-Container 212 (Nutzdatenobjekt) zugeordnetes Rechteobjekt 214 (Zugriffsparameter), wobei beide in einer Speichereinrichtung 210 des Kommunikations-Endgeräts 200 gespeichert sind. Weiterhin ist im Kommunikations-Endgerät 200 ein DRM-Agent 220 vorgesehen, welcher den Umgang mit den entsprechenden digitalen Rechten regelt.

Der DRM-Agent 220 ist weiterhin mit einer Speichereinrichtung 240 zur Speicherung einer Liste bevorzugter Telekommunikations-Netzwerke 242, 244 verbunden. In dieser werden Telekommunikations-Netzwerke 242, 244 gespeichert, die vom Kommunikations-Endgerät 200 verwendet werden können. Die Priorisierung der im Speicher 240 enthaltenen Telekommunikations-Netzwerke 242, 244 erfolgt unter anderem durch den DRM-Agenten 220. Dieser gestaltet die Priorisierung derart, dass das mindestens eine Netzwerk 242 die höchste Priorität erhält, dass eine maximale Anzahl von in der Speichereinrichtung 210 der Nutzdatenobjekte 212 enthaltenen Zugriffsparameter 214 erfüllen. Weiterhin ist mit dem DRM-Agenten 220 eine Netzwahleinheit 230 verbunden, welche die Einwahl in ein bestimmtes Telekommunikations-Netzwerk vornimmt.

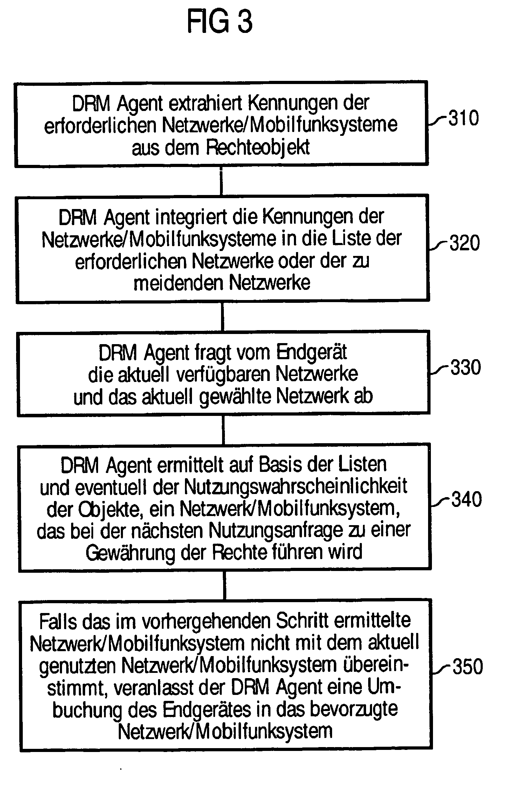

Ein Beispiel für einen Funktionsablauf innerhalb des in Figur 2 dargestellten Kommunikations-Endgeräts 200 ist in Figur 3 dargestellt. Dabei extrahiert in einem ersten Schritt 310 der DRM-Agent die Kennungen der erforderlichen Netzwerke oder auch Mobilfunksysteme aus dem Rechteobjekt. In einem zweiten Schritt 320 integriert der DRM-Agent diese Kennungen in eine Liste der erforderlichen Netzwerke oder eine Liste der zu meidenden Netzwerke. Im nächsten Schritt 330 fragt der Agent vom Telekommunikations-Endgerät die aktuell verfügbaren Netzwerke sowie das aktuell gewählte Netz ab. Danach ermittelt der DRM-Agent im Schritt 240 auf Basis der Listen und eventuell der Nutzungswahrscheinlichkeit der Objekte, ein Netzwerk bzw. ein Mobilfunksystem, das bei der nächsten Nutzungsanfrage zu einer Gewährung von digitalen Rechten führen wird. Im letzten in Figur 3 dargestellten Schritt 350 veranlasst der DRM-Agent eine Umbuchung des Endgeräts in das im Schritt 340 bestimmte Telekommunikationsnetz, falls das im Schritt 340 bestimmte Netzwerk bzw. Mobilfunksystem nicht mit dem aktuell genutzten Netzwerk bzw. Mobilfunksystem übereinstimmt.

Die vorliegende Erfindung beschreibt ein Verfahren zur Priorisierung von Telekommunikations-Netzwerken in einem Telekommunikations-Endgerät, wobei in dem Telekommunikations-Endgerät ein Nutzdatenobjekt gespeichert ist und dem Nutzdatenobjekt ein Zugriffsparameter zugeordnet ist, welcher den Zugriff auf das Nutzdatenobjekt in Abhängigkeit davon zulässt, in welches Telekommunikations-Netzwerk das Telekommunikations-Endgerät eingebucht ist und wobei weiterhin die Telekommunikations-Netzwerke unter anderem unter Verwendung des Zugriffsparameters priorisiert werden. Bei den Telekommunikations-Netzwerken kann es sich auch um ein einzelnes Telekommunikations-Netzwerk handeln, wobei die Priorisierung dann erkennen läßt, ob dieses Telekommunikations-Netzwerk für ein oder mehrere Nutzdatenobjekte im Telekommunikations-Endgerät geeignet ist oder nicht. Mit diesem Verfahren kann dem Benutzer eines Telekommunikations-Endgeräts eine komfortable Verwendung von Nutzdatenobjekten ermöglicht werden, deren Zugriff durch Bedingungen eingeschränkt wird, die sich aus dem Umfeld des Nutzers, wie beispielsweise dem verwendeten Kommunikations-Netzwerk, der verwendeten Übertragungstechnik oder dem geographischen Umfeld herleiten.

## Patentansprüche

1. Verfahren zur Priorisierung von Telekommunikations-Netzwerken in einem Telekommunikations-Endgerät (200),
- bei dem ein Nutzdatenobjekt (212) in dem Telekommunikations-Endgerät (200) gespeichert wird,
- bei dem dem Nutzdatenobjekt (118, 212) ein Zugriffsparameter (120, 214) zugeordnet wird, der den Zugriff auf das Nutzdatenobjekt (118, 212) in Abhängigkeit davon zulässt, in welches Telekommunikations-Netzwerk das Telekommunikations-Endgerät (200) eingebucht ist, und
- bei dem die Telekommunikations-Netzwerke unter Verwendung des Zugriffsparameters (120, 214) priorisiert werden.

2. Verfahren nach Anspruch 1,
**dadurch gekennzeichnet,**
**dass** dem Nutzdatenobjekt (118, 212) ein eine netzwerkbezogene, eine technische und/oder eine geographische Zulassungsinformation umfassender Zugriffsparameter (120, 214) zugeordnet wird.

3. Verfahren nach Anspruch 1 oder 2,
**dadurch gekennzeichnet,**
**dass** das Telekommunikations-Endgerät (200) versucht, sich in ein verwendetes Telekommunikations-Netzwerk einzubuchen, in welchem der Zugriff auf das Nutzdatenobjekt (118, 212) gemäß dem Zugriffsparameter (120, 214) zugelassen ist.

4. Verfahren nach Anspruch 3,
**dadurch gekennzeichnet,**
**dass** das Telekommunikations-Endgerät (200) selbsttätig versucht, sich in das verwendete Telekommunikations-Netzwerk einzubuchen.

5. Verfahren nach Anspruch 3 oder 4,
**dadurch gekennzeichnet,**
**dass** sich das Telekommunikations-Endgerät (200) falls dieses vor dem Einbuchen in das verwendete Telekommunikations-Netzwerk in ein vorhergehendes Telekommunikations-Netzwerk eingebucht war, in welchem der Zugriff auf das Nutzdatenobjekt (118, 212) gemäß dem Zugriffsparameter (120, 214) unzulässig ist, aus dem vorhergehenden Telekommunikations-Netzwerk selbsttätig ausbucht.

6. Verfahren nach einem der vorhergehenden Ansprüche,
**dadurch gekennzeichnet,**
**dass** mindestens ein bevorzugtes Telekommunikations-Netzwerk die höchste Priorität erhält, welches gemäß einer maximalen Zahl von im Telekommunikations-Endgerät (200) vorliegenden Zugriffsparametern (120, 214) zugelassen ist.

7. Verfahren nach Anspruch 6,
**dadurch gekennzeichnet,**
**dass** das Telekommunikations-Endgerät (200) versucht, sich in ein Telekommunikations-Netzwerk mit der höchsten Priorität einzubuchen.

8. Verfahren nach einem der vorhergehenden Ansprüche,
**dadurch gekennzeichnet,**
**dass** gemäß dem Zugriffsparameter (120, 214) oder den im Telekommunikations-Endgerät (200) vorliegenden Zugriffsparametern (120, 214) zugelassene Telekommunikations-Netzwerke (242, 244) in eine im Telekommunikations-Endgerät und/oder im Telekommunikations-Netzwerk geführte Liste bevorzugter Telekommunikations-Netzwerke (242, 244) aufgenommen werden.

9. Verfahren nach Anspruch 8,
**dadurch gekennzeichnet,**
**dass** gemäß dem Zugriffsparameter (120, 214) und/oder den im Telekommunikations-Endgerät (200) vorliegenden Zugriffsparametern (120, 214) zugelassene Telekommunikations-Netzwerke (242, 244) innerhalb der Liste bevorzugter Telekommunikations-Netzwerke (242, 244) höher priorisiert werden als Telekommunikations-Netzwerke (242, 244), die gemäß dem Zugriffsparameter (120, 214) und/oder den im Telekommunikations-Endgerät (200) vorliegenden Zugriffsparametern (120, 214) unzulässig sind.

10. Verfahren nach Anspruch 8 oder 9,
**dadurch gekennzeichnet,**
**dass** mindestens zwei Zugriffsparameter (120, 214) vorliegen und mindestens ein bevorzugtes Telekommunikations-Netzwerk (242, 244) innerhalb der Liste bevorzugter Telekommunikations-Netzwerke (242, 244) die höchste Priorität erhält, welches gemäß einer maximalen Zahl von Zugriffsparametern (120, 214) zugelassen ist.

11. Verfahren nach einem der Ansprüche 8 bis 10,
**dadurch gekennzeichnet,**
**dass** das Telekommunikations-Endgerät (200) versucht, sich in ein Telekommunikations-Netzwerk (242, 244) aus der Liste bevorzugter Telekommunikations-Netzwerke (242, 244) mit der höchsten Priorität einzubuchen.

12. Verfahren nach einem der vorhergehenden Ansprüche,
**dadurch gekennzeichnet,**
**dass** Telekommunikations-Netzwerke, die gemäß dem Zugriffsparameter (120, 214) oder den im Telekommunikations-Endgerät vorliegenden Zugriffsparametern (120, 214) unzulässig sind, in eine Liste unzulässiger Telekommunikations-Netzwerke aufgenommen werden.

13. Verfahren nach einem der vorhergehenden Ansprüche,
**dadurch gekennzeichnet,**
**dass** ein Telekommunikations-Netzwerk, in welches das Telekommunikations-Endgerät (200) zuletzt eingebucht war, im Telekommunikations-Netzwerk gespeichert wird, und diese Information bei der Priorisierung verwendet wird und/oder bei der Ermittlung eines verwendeten Kommunikations-Netzwerks verwendet wird.

14. Telekommunikations-Endgerät (200) mit einer Steuereinrichtung (220),
**dadurch gekennzeichnet,**
**dass** das Telekommunikations-Endgerät Mittel aufweist, die zur Durchführung aller Schritte eines Verfahrens gemäß einem der Ansprüche 1 bis 7 oder 9-13 eingerichtet sind.

15. Telekommunikations-Endgerät nach Anspruch 14,
**dadurch gekennzeichnet,**
**dass** das Telekommunikations-Endgerät (200) eine Speichereinrichtung (240) umfasst und zur Durchführung eines Verfahrens gemäß der Ansprüche 8 bis 12 eingerichtet ist, wobei die Liste bevorzugter Telekommunikations-Netzwerke (242, 244) und/oder die Liste unzulässiger Telekommunikations-Netzwerke in der Speichereinrichtung (240) gespeichert ist.

16. Telekommunikations-Endgerät nach Anspruch 15,
**dadurch gekennzeichnet,**
**dass** das Telekommunikations-Endgerät (200) ein entnehmbares Speichermodul umfasst und die Liste bevorzugter Telekommunikations-Netzwerke (242, 244) und/oder die Liste unzulässiger Telekommunikations-Netzwerke zumindest teilweise in dem entnehmbaren Speichermodul gespeichert ist.

## Claims

1. Method for prioritising telecommunications networks in a telecommunications terminal (200),
- wherein a user data object (212) is stored in the telecommunications terminal (200),
- wherein the user data object (118, 212) is assigned an access parameter (120, 214) which permits access to the user data object (118, 212) depending on which telecommunications network the telecommunications terminal (200) is registered into, and
- wherein the telecommunications networks are prioritised using the access parameter (120, 214).

2. Method according to claim 1,
**characterised in that**
an access parameter (120, 214) comprising network-related, technical and/or geographical permission information is assigned to the user data object (118, 212).

3. Method according to claim 1 or 2,
**characterised in that**
the telecommunications terminal (200) attempts to register into a telecommunications network used in which access to the user data object (118, 212) is permitted according to the access parameter (120, 214).

4. Method according to claim 3,
**characterised in that**
the telecommunications terminal (200) automatically attempts to register into the telecommunications network used.

5. Method according to claim 3 or 4,
**characterised in that**
the telecommunications terminal (200), if, prior to registering into the telecommunications network used, was registered into a previous telecommunications network in which access to the user data object (118, 212) is impermissible according to the access parameter (120, 214), automatically deregisters from the previous telecommunications network.

6. Method according to one of the preceding claims,
**characterised in that**
at least one preferred telecommunications network permitted according to a maximum number of access parameters (120, 214) present in the telecommunications terminal (200) is given the highest priority.

7. Method according to claim 6,
**characterised in that**
the telecommunications terminal (200) attempts to register into the telecommunications network with the highest priority.

8. Method according to one of the preceding claims,
**characterised in that**
telecommunications networks (242, 244) permitted according to the access parameter (120, 214) or according to the access parameters (120, 214) present in the telecommunications terminal (200) are entered in a list of preferred telecommunications networks (242, 244) maintained in the telecommunications terminal and/or in the telecommunications network.

9. Method according to claim 8
**characterised in that**
telecommunications networks (242, 244) permitted according to the access parameter (120, 214) and/or according to the access parameters (120, 214) present in the telecommunications terminal (200) become a higher priority in the list of preferred telecommunications networks (242, 244) than telecommunications networks (242, 244) that are impermissible according to the access parameter (120, 214) and/or according to the access parameters (120, 214) present in the telecommunications terminal (200).

10. Method according to claim 8 or 9,
**characterised in that**
at least two access parameters (120, 214) are present and at least one preferred telecommunications network (242, 244) permitted according to a maximum number of access parameters (120, 214) is given the highest priority within the list of preferred telecommunications networks (242, 244).

11. Method according to one of claims 8 to 10,
**characterised in that**
the telecommunications terminal (200) attempts to register into a telecommunications network (242, 244) from the list of preferred telecommunications networks (242, 244) with the highest priority.

12. Method according to one of the preceding claims,
**characterised in that**
telecommunications networks which are impermissible according to the access parameter (120, 214) or according to the access parameters (120, 214) present in the telecommunications terminal are entered in a list of impermissible telecommunications networks.

13. Method according to one of the preceding claims,
**characterised in that**
a telecommunications network into which the telecommunications terminal (200) was last registered is stored in the telecommunications network and this information is used for prioritisation and/or to determine the communications network used.

14. Telecommunications terminal (200) having a control device (220),
**characterised in that**
the telecommunications terminal has means that are set up to carry out all steps of a method according to one of claims 1 to 7 or 9 to 13.

15. Telecommunications terminal according to claim 14,
**characterised in that**
the telecommunications terminal (200) incorporates a memory device (214) and is set up to carry out a method according to claims 8 to 12, the list of preferred telecommunications networks (242, 244) and/or the list of impermissible telecommunications networks being stored in said memory device (240).

16. Telecommunications terminal according to claim 15,
**characterised in that**
the telecommunications terminal (200) comprises a removable memory module and the list of preferred telecommunications networks (242, 244) and/or the list of impermissible telecommunications terminals is stored at least in part in said removable memory module.

## Revendications

1. Procédé de hiérarchisation de réseaux de télécommunications dans un terminal de télécommunications (200),
- dans lequel un objet de données utiles (212) est mémorisé dans le terminal de télécommunications (200),
- dans lequel un paramètre d'accès (120, 214) autorisant l'accès à l'objet de données utiles (118, 212) en fonction du réseau de télécommunications dans lequel le terminal de télécommunications (200) est enregistré est associé à l'objet de données utiles (118, 212) et
- dans lequel les réseaux de télécommunications sont hiérarchisés en utilisant le paramètre d'accès (120, 214).

2. Procédé selon la revendication 1, **caractérisé en ce qu'**un paramètre d'accès (120, 214) comprenant une information d'admission technique et/ou géographique relative à un réseau est associé à l'objet de données utiles (118, 212).

3. Procédé selon la revendication 1 ou 2, **caractérisé en ce que** le terminal de télécommunications (200) essaie de s'enregistrer dans un réseau de télécommunications utilisé dans lequel l'accès à l'objet de données utiles (118, 212) est autorisé selon le paramètre d'accès (120, 214).

4. Procédé selon la revendication 3, **caractérisé en ce que** le terminal de télécommunications (200) essaie automatiquement de s'enregistrer dans le réseau de télécommunications utilisé.

5. Procédé selon la revendication 3 ou 4, **caractérisé en ce que** le terminal de télécommunications (200) quitte automatiquement le réseau de télécommunications précédent dans le cas où il était enregistré, avant l'enregistrement dans le réseau de télécommunications utilisé, dans un réseau de télécommunications précédent dans lequel l'accès à l'objet de données utiles (118, 212) est non autorisé selon le paramètre d'accès (120, 214).

6. Procédé selon l'une des revendications précédentes, **caractérisé en ce qu'**au moins un réseau de télécommunications privilégié autorisé selon un nombre maximum de paramètres d'accès (120, 214) présents dans le terminal de télécommunications (200) obtient la priorité la plus élevée.

7. Procédé selon la revendication 6, **caractérisé en ce que** le terminal de télécommunications (200) essaie de s'enregistrer dans un réseau de télécommunications ayant la priorité la plus élevée.

8. Procédé selon l'une des revendications précédentes, **caractérisé en ce que** des réseaux de télécommunications (242, 244) autorisés selon le paramètre d'accès (120, 214) ou les paramètres d'accès (120, 214) présents dans le terminal de télécommunications (200) sont inclus dans une liste de réseaux de télécommunications privilégiés (242, 244) tenue dans le terminal de télécommunications et/ou dans le réseau de télécommunications.

9. Procédé selon la revendication 8, **caractérisé en ce que** les réseaux de télécommunications (242, 244) autorisés selon le paramètre d'accès (120, 214) et/ou les paramètres d'accès (120, 214) présents dans le terminal de télécommunications (200) obtiennent un niveau de priorité plus élevé à l'intérieur de la liste de réseaux de télécommunications privilégiés (242, 244) que des réseaux de télécommunications (242, 244) qui sont non autorisés selon le paramètre d'accès (120, 214) et/ou les paramètres d'accès (120, 214) présents dans le terminal de télécommunications (200).

10. Procédé selon la revendication 8 ou 9, **caractérisé en ce qu'**il existe au moins deux paramètres d'accès (120, 214) et au moins un réseau de télécommunications privilégié (242, 244) autorisé selon un nombre maximum de paramètres d'accès (120, 214) obtient la priorité la plus élevée à l'intérieur de la liste de réseaux de télécommunications privilégiés (242, 244).

11. Procédé selon l'une des revendications 8 à 10, **caractérisé en ce que** le terminal de télécommunications (200) essaie de s'enregistrer dans un réseau de télécommunications (242, 244) de la liste de réseaux de télécommunications privilégiés (242, 244) ayant la priorité la plus élevée.

12. Procédé selon l'une des revendications précédentes, **caractérisé en ce que** des réseaux de télécommunications non autorisés selon le paramètre d'accès (120, 214) ou les paramètres d'accès (120, 214) présents dans le terminal de télécommunications sont inclus dans une liste de réseaux de télécommunications non autorisés.

13. Procédé selon l'une des revendications précédentes, **caractérisé en ce qu'**un réseau de télécommunications dans lequel le terminal de télécommunications (200) était enregistré en dernier est mémorisé dans le réseau de télécommunications et cette information est utilisée lors de la hiérarchisation et/ou utilisée lors de la détermination d'un réseau de communication utilisé.

14. Terminal de télécommunications (200) comprenant un dispositif de commande (220), **caractérisé en ce que** le terminal de télécommunications comprend des moyens adaptés pour l'exécution de toutes les étapes d'un procédé selon l'une des revendications 1 à 7 ou 9-13.

15. Terminal de télécommunications selon la revendication 14, **caractérisé en ce que** le terminal de télécommunications (200) comprend un dispositif de mémoire (240) et est adapté pour l'exécution d'un procédé selon les revendications 8 à 12, la liste de réseaux de télécommunications privilégiés (242, 244) et/ou la liste de réseaux de télécommunications non autorisés étant mémorisée dans le dispositif de mémoire (240).

16. Terminal de télécommunications selon la revendication 15, **caractérisé en ce que** le terminal de télécommunications (200) comprend un module de mémoire retirable et la liste de réseaux de télécommunications privilégiés (242, 244) et/ou la liste de réseaux de télécommunications non autorisés est mémorisée, au moins partiellement, dans le module de mémoire retirable.
